# EUROPÄISCHE PATENTANMELDUNG

(11) **EP 1 561 970 A2**
(43) Veröffentlichungstag der Anmeldung: **10.08.2005**
(21) Anmeldenummer: 05100897.7
(22) Anmeldetag: 09.02.2005
(51) Int. Cl.: F16H 25/20, A61G 7/018

(54) **Lineareinheit**

(30) Priorität: 09.02.2004 DE 102004006368
(71) Anmelder: Ludwig Ehrhardt GmbH, 35321 Laubach (DE)
(72) Erfinder: Reitzig, Klaus, 47611 Issum (DE)
(74) Vertreter: von Ahsen, Erwin-Detlef, Dipl.-Ing.

(57) **Zusammenfassung**

Die Erfindung betrifft eine Lineareinheit mit einer Spindel (15), einer auf der Spindel (15) laufenden Spindelmutter (17) und einem Antrieb (18), mittels dessen die Spindel (15) oder die Spindelmutter (17) um ihre Längsachse rotierend antreibbar ist. Für eine wirksame Drehmomentbegrenzung ist die Lineareinheit nach einem ersten Erfindungsgedanken dadurch gekennzeichnet, daß der Antrieb (18) mit der Spindel (15) bzw. der Spindelmutter (17) mittels einer Kupplung (21) gekuppelt ist, welche bei Überschreiten eines vorbestimmten Drehmomentes, nachfolgend als Grenzmoment bezeichnet, selbsttätig auskuppelt. Nach einem anderen, alternativen Erfindungsgedanken ist die Lineareinheit dadurch gekennzeichnet, daß der Antrieb (18) bei Überschreiten eines vorbestimmten Drehmomentes, nachfolgend als Grenzmoment bezeichnet, selbsttätig abschaltet.

## Beschreibung

Die Erfindung betrifft eine Lineareinheit mit einer Spindel, einer auf der Spindel laufenden Spindelmutter und einem Antrieb, mittels dessen die Spindel oder die Spindelmutter um ihre Längsachse rotierend antreibbar ist.

Derartige Lineareinheiten sind aus der Praxis bekannt. Sie werden häufig als Verstelleinheiten eingesetzt. Zum Beispiel werden sie zum Verstellen des Kopfteils oder des Fußteils von Krankenhausbetten oder, ganz allgemein, von Pflegebetten verwendet. Ein Gehäuse der Lineareinheit ist mit dem Bettgestell verbunden, während ein Schubrohr an dem Kopf- oder Fußteil befestigt ist. Im Gehäuse ist die Spindel durch den Antrieb um ihre Längsachse drehbar gelagert, während die Spindelmutter fest mit dem Schubrohr verbunden ist.

Mit solchen Lineareinheiten kann der Patient selbst oder das Pflegepersonal leicht durch Betätigen eines Schalters eine bequeme Stellung für den Kopf- oder Fußteil einstellen. Die Steigung der Spindel ist oft selbsthemmend ausgelegt, so daß selbst bei einem Ausfall der Energieversorgung für den Antrieb sich die Kopf- oder Fußstütze nicht selbsttätig wieder absenkt. An die Lineareinheiten werden aber auch noch weitere Anforderungen gestellt:

Erste Anforderung ist eine gesteuerte Schnellauslösung der Lineareinheit. Muß der Patient schnell in eine Schocklage gebracht werden, muß die Kopfstütze schnell abgelassen werden, ohne daß es hierzu des langwierigen motorischen Antriebes bedarf. Bei dieser Notfallbetätigung läuft die Spindel, angetrieben durch die Spindelmutter, frei und dient als Dämpfung für die Absenkung der Kopfstütze. Hier ist aber die Selbsthemmung zwischen Spindel und Spindelmutter schädlich. Die Steigung des Spindelgewindes sollte nicht selbsthemmend ausgelegt sein, was dem obengenannten Ziel, daß sich die Kopfstütze auch bei Energieausfall nicht selbsttätig absenken soll, zuwiderläuft. Es ist deshalb vorgeschlagen worden, die Steigung des Spindelgewindes nicht selbsthemmend auszulegen, sondern ein Schneckengetriebe, über das die Spindel angetrieben wird, selbsthemmend zu gestalten. Zur Notfallbetätigung wird eine Kupplung zwischen Spindel und dem Schneckengetriebe ausgekuppelt, so daß sich die Kopfstütze schnell absenken läßt.

Eine andere Anforderung an derartige Lineareinheiten ist, daß beim Absenken der Kopfstütze versehentlich zwischen den Kopf- bzw. Fußteil einerseits und den Hauptrahmen andererseits gelangende Körperteile des Bedienpersonals oder des Patienten nicht verletzt werden dürfen. Der Antrieb muß sich also bei Auftreten eines Widerstandes selbständig unterbrechen. Diese Funktion braucht dabei nur beim Einfahren des Schubrohres (Absenken der Kopf- oder Fußstütze) aktiv zu sein.

Eine häufig gestellte Zusatzanforderung an Lineareinheiten ist auch die Begrenzung des Drehmomentes und damit der von der Lineareinheit ausgeübten Kraft beim Ausfahren des Schubrohres.

Der Erfindung liegt das Problem zugrunde, eine Lineareinheit zu schaffen, bei der zumindest die obengenannten Anforderungen, das eine vorbestimmte Kraft von der Lineareinheit nicht überschritten wird, auf möglichst einfache Weise, das heißt, durch eine konstruktiv einfach gestaltete Lineareinheit, zuverlässig erfüllt werden.

Für dieses Problems wird erfindungsgemäß eine mechanische und eine elektrische Lösung vorgeschlagen.

Nach der mechanischen Lösung ist die erfindungsgemäße Lineareinheit dadurch gekennzeichnet, daß der Antrieb mit der Spindel bzw. der Spindelmutter mittels einer Kupplung gekuppelt ist, welche bei Überschreiten eines vorbestimmten Drehmomentes selbsttätig auskuppelt.

Erfindungsgemäß ist also eine einzige Kupplung vorgesehen, die selbsttätig auskuppelt, wenn ein vorbestimmtes Drehmoment, welches auch als Grenzmoment bezeichnet werden kann, überschritten wird. Dieses Grenzmoment bestimmt sich je nach Steigung des Spindelgewindes nach der Kraft, die von der Lineareinheit beim Einfahren des Schubrohres und/oder beim Ausfahren des Schubrohres maximal ausgeübt werden darf, um beispielsweise Verletzungen an eventuell zwischen die Kopfstütze und den Hauptrahmen gelangende Körperteile zu verhindern.

Um zusätzlich eine sichere Notfallauslösung zu gewehrleisten, wird es oft nicht ausreichen, die Schubstange beispielsweise über die Kopfstütze manuell zurückzudrücken und dadurch die Kupplung auszulösen. Nach einer Weiterbildung ist deshalb vorgesehen, daß die Kupplung zusätzlich manuell auskuppelbar ist. Für die Notfallauslösung wird sie manuell vom Bediener betätigt. Sowohl für den "Normalbetrieb" als auch für die Notfallauslösung ist nur eine Kupplung vorgesehen.

Als Kupplung eignet sich eine Reibkupplung, die bei Überschreiten des Grenzmomentes durchrutscht. Dieses wird durch Auswahl einer geeigneten Reibpaarung und Einstellen der auf die Reibflächen wirkenden Normalkraft in an sich bekannter Weise eingestellt.

Alternativ eignen sich aber auch formschlüssig wirkende Kupplungen, bei denen die beiden Kupplungshälften an den einander berührenden Flächen ein Zick-Zack- oder Wellenprofil aufweisen. Das Grenzmoment läßt sich hier über die Steigung des ZickZack- oder Wellenprofiles und die auf die Kupplungshälften wirkende Normalkraft einstellen. Diese Variante hat zudem den Vorteil, daß durch die Wahl unterschiedlicher Flankensteigungen auf jeder Seite der Kupplungsvorsprünge, also je Drehrichtung, auch unterschiedliche Grenzmomente je Drehrichtung eingestellt werden können. Demzufolge lassen sich so auch unterschiedliche Maximalkräfte für das Einfahren des Schubrohres einerseits und das Ausfahren des Schubrohres andererseits einstellen.

Weitere Merkmale der Erfindung beziehen sich auf konstruktive Einzelheiten der Kupplung.

Die elektrische Lösung sieht vor, der Antrieb bei Überschreiten eines vorbestimmten Drehmomentes selbsttätig abschaltet. Hierfür dient vorzugsweise ein Strombegrenzungsmodul, welches bei Überschreiten eines bestimmten Wertes der Stromaufnahme durch den Antrieb die Energieversorgung für den Antrieb unterbricht. Die Stromaufnahme ist nämlich proportional zum abgegebenen Drehmoment des Antriebs, so daß sich auf einfache Weise das maximale Drehmoment für den Antrieb begrenzen läßt.

Bei Gleichstrommotoren für den Antrieb erfolgt der Drehrichtungswechsel durch einfache Umkehr der Polarität. Um auch hier eine wirksame Drehmomentbegrenzung zu gewährleisten, sollte die Polaritätsumkehr vor das Strombegrenzungsmodul geschaltet sein.

Die Erfindung wird nachfolgend anhand eines in der Zeichnung dargestellten Ausführungsbeispieles näher erläutert. Es zeigen:
- Fig. 1: eine Lineareinheit mit den Erfindungsmerkmalen im Längsschnitt,
- Fig. 2: die Lineareinheit gemäß Fig. 1 im Längsschnitt in einer gemäß Fig. 1 um 90° verdrehten Ebene,
- Fig. 3: ein Detail III der Lineareinheit gemäß Fig. 1 und 2, nämlich des Antriebsteiles im Längsschnitt,
- Fig. 4: eine Kupplungshälfte der Lineareinheit gemäß Fig. 1 und 2,
- Fig. 5: eine mit der Kupplungshälfte gemäß Fig. 4 korrespondierende Kupplungshälfte der Lineareinheit gemäß Fig. 1 und 2.

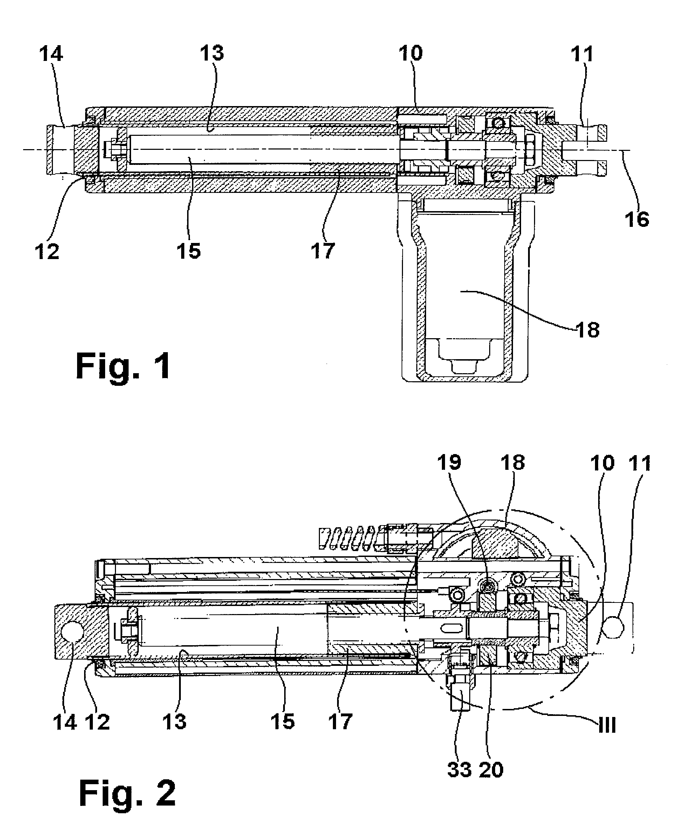

Die in Fig. 1 und 2 gezeigte Lineareinheit weist ein Gehäuse 10 auf, an deren rückwärtigem Stirnende ein Auge 11 angeformt ist, mittels dessen die Lineareinheit beispielsweise am Hauptrahmen eines Pflegebettes schwenkbar angebracht werden kann. An dem dem Auge 11 gegenüberliegenden Ende des Gehäuses 10 ist eine Führungsbohrung 12 vorgesehen, in der ein Schubrohr 13 geführt ist. Das Schubrohr 13 weist an seinem aus dem Gehäuse 10 herausragenden Ende ein weiteres Auge 14 auf, mit dem es gelenkig, beispielsweise mit der Kopfstütze eines Pflegebettes, verbunden werden kann. Innerhalb des Schubrohres 13 und des Gehäuses 10 ist eine Spindel 15 um ihre Längsachse 16 drehbar in an sich bekannter Weise gelagert. Innerhalb des Schubrohres 13 ist eine Spindelmutter 17 unverdrehbar mit dem Schubrohr 13 angebracht, die mit der Spindel 15 zusammenwirkt, wie dieses bei Lineareinheiten allgemein bekannt ist.

Seitlich am Gehäuse 10 ist ein elektromotorischer Antrieb 18 angebracht, der, wie ebenfalls an sich bekannt, eine Schnecke 19 treibt, die ihrerseits mit einem Schneckenrad 20 kämmt. Die Steigung der Schnecke 19 ist so ausgelegt, daß auch bei einem Ausfall der Energieversorgung für den Antrieb 18 die Kopfstütze oder dergleichen nicht selbsttätig abgesenkt wird. Die Schnecke 19 übt also hier eine Haltefunktion aus, während die Steigung der Spindel 15 und der Spindelmutter 17 nicht selbsthemmend ausgebildet ist.

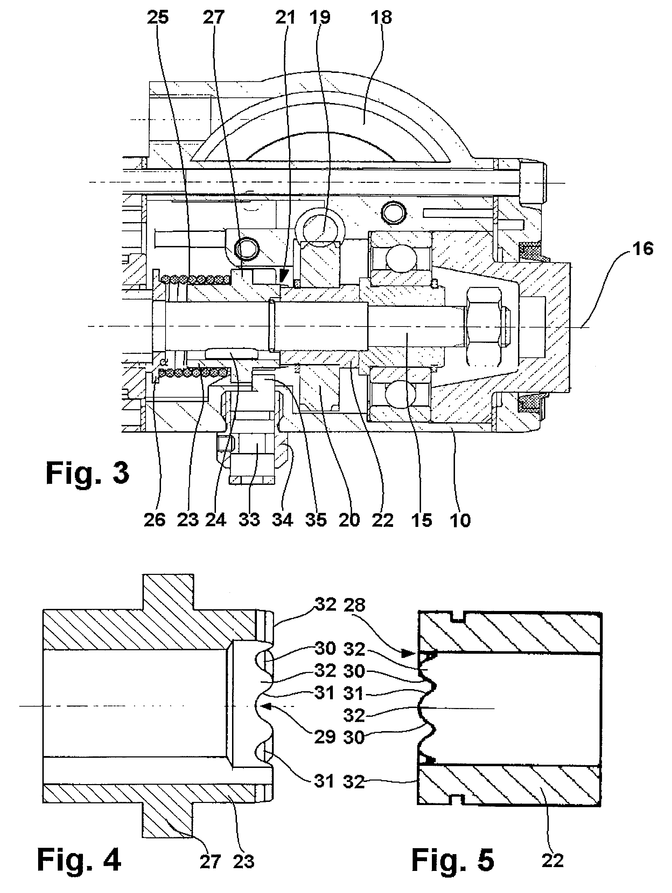

Das Schneckenrad 20 treibt über eine in Fig. 3 näher gezeigte Kupplung 21 die Spindel 15 an. Das Schneckenrad 20 sitzt dabei auf einer ersten Kupplungshälfte 22, welche ihrerseits um die Längsachse 16 drehbar, aber in Richtung der Längsachse 16 unverschiebbar auf der Spindel 15 gelagert ist. Diese Kupplungshälfte 22 wird deshalb im Rahmen der weiteren Beschreibung als feste Kupplungshälfte bezeichnet. Die feste Kupplungshälfte 22 wirkt mit einer weiteren Kupplungshälfte 23 zusammen, welche über eine Paßfeder 24 unverdrehbar aber in Richtung der Längsachse 16 verschieblich auf der Spindel 15 gelagert ist. Eine Druckfeder 25, die zwischen einem Druckteller 26 an der Spindel 15 und einem Bund 27 an der verschieblichen Kupplungshälfte 23 eingespannt ist, spannt die verschiebliche Kupplungshälfte 23 in Richtung auf die feste Kupplungshälfte 22 vor.

Die verschiebliche Kupplungshälfte 23 ist in Fig. 4 und die feste Kupplungshälfte 22 in Fig. 5 näher gezeigt. Wie diesen Figuren zu entnehmen ist, sind die einander zugewandten Stirnflächen der Kupplungshälften 22, 23 mit zueinander korrespondierendem Wellenprofil 28 bzw. 29 versehen. Diese Wellenprofile 28, 29 greifen im eingekuppelten Zustand der Kupplung 21 ineinander und übertragen das Drehmoment von dem Schneckenrad 20 auf die Spindel 15. Wird ein bestimmtes maximales Drehmoment (Grenzmoment) überschritten, wird infolge der Steigung der Flanken 30, 31 der einzelnen Kupplungsvorsprünge 32 die verschiebliche Kupplungshälfte 23 gegen die Kraft der Druckfeder 25 in Richtung auf den Druckteller 26 gedrückt, so daß die Kupplungsvorsprünge 32 außer Eingriff gelangen. Die Kupplung 21 ist ausgekuppelt und die Drehmomentübertragung unterbrochen. Sobald das Grenzmoment wieder unterschritten ist, drückt die Druckfeder 25 die verschiebliche Kupplungshälfte 23 von dem Druckteller 26 weg und bringt die Kupplung 21 in Eingriff.

Gegebenenfalls kann nach einer weiteren Ausgestaltung der Erfindung auch ein Rastmittel vorgesehen sein, durch welches die verschiebliche Kupplungshälfte 23 in der ausgekuppelten Stellung arretiert wird, falls die Kupplung 21 infolge Überschreitens des Grenzmomentes ausgekuppelt wird. Die Kupplung 21 muß dann erst manuell wieder eingekuppelt werden. Diese Variante ist bei bestimmten Anwendungsfällen von Vorteil, zum Beispiel immer dann, wenn zunächst aus Sicherheitsgründen überprüft werden muß, warum die Kupplung 21 ausgelöst hat.

Das Grenzmoment, bei dem die Kupplung 21 auskuppelt, läßt sich über die Vorspannung der Feder 25 und die Steigung der Flanken 30,31 der Kupplungsvorsprünge 32 bestimmen. Dabei können die Flanken 30 und 31 jeweils eine unterschiedliche Steigung aufweisen. Hierdurch läßt sich je Drehrichtung der Spindel 15 ein unterschiedliches Grenzmoment einstellen.

Die Kupplung 21 ist auch manuell trennbar. Hierzu dient ein Exzenterzapfen 33, der in einer Buchse 34 um seine Längsachse drehbar im Gehäuse 11 geführt ist. Ein Finger 35 des Exzenterzapfens 33 hintergreift den Bund 27 der verschieblichen Kupplungshälfte 23 auf der der Druckfeder 25 gegenüberliegenden Seite. Durch Drehen des Exzenterzapfens 33 um seine Längsachse drückt der Finger 35 gegen den Bund 27 und drückt so die verschiebliche Kupplungshälfte 23 gegen die Kraft der Druckfeder 25 in Richtung auf den Druckteller 26. Die Kupplung 21 wird ausgekuppelt. Durch Weiterdrehen oder Rückdrehen des Exzenterzapfens 33 wird die Kupplung 21 wieder in Eingriff gebracht.

Ein nicht zeichnerisch dargestelltes Ausführungsbeispiel sieht eine elektrische Lösung für die Drehmomentbegrenzung vor. Hierfür dient ein Strombegrenzungsmodul, welches bei Überschreiten eines bestimmten Wertes der Stromaufnahme durch den Antrieb die Energieversorgung für den Antrieb unterbricht. Die Stromaufnahme ist nämlich proportional zum abgegebenen Drehmoment des Antriebs, so daß sich auf einfache Weise das maximale Drehmoment für den Antrieb begrenzen läßt.

Bei Gleichstrommotoren für den Antrieb erfolgt der Drehrichtungswechsel durch einfache Umkehr der Polarität. Um auch hier eine wirksame Drehmomentbegrenzung zu gewährleisten, sollte die Polaritätsumkehr vor das Strombegrenzungsmodul geschaltet sein.

### Bezugszeichenliste:

- 10: Gehäuse
- 11: Auge
- 12: Bohrung
- 13: Schubrohr
- 14: Auge
- 15: Spindel
- 16: Längsachse
- 17: Spindelmutter
- 18: Antrieb
- 19: Schnecke
- 20: Schneckenrad
- 21: Kupplung
- 22: feste Kupplungshälfte
- 23: verschiebliche Kupplungshälfte
- 24: Paßfeder
- 25: Druckfeder
- 26: Druckteller
- 27: Bund
- 28: Wellenprofil
- 29: Wellenprofil
- 30: Flanke
- 31: Flanke
- 32: Kupplungsvorsprung
- 33: Exzenterzapfen
- 34: Buchse
- 35: Finger

## Patentansprüche

1. Lineareinheit mit einer Spindel (15), einer auf der Spindel (15) laufenden Spindelmutter (17) und einem Antrieb (18), mittels dessen die Spindel (15) oder die Spindelmutter (17) um ihre Längsachse rotierend antreibbar ist, **dadurch gekennzeichnet, daß** der Antrieb (18) mit der Spindel (15) bzw. der Spindelmutter (17) mittels einer Kupplung (21) gekuppelt ist, welche bei Überschreiten eines vorbestimmten Drehmomentes, nachfolgend als Grenzmoment bezeichnet, selbsttätig auskuppelt.

2. Lineareinheit nach Anspruch 1, **dadurch gekennzeichnet, daß** die Kupplung (21) auch manuell auskuppelbar ist.

3. Lineareinheit nach Anspruch 1 oder 2, **dadurch gekennzeichnet, daß** die Kupplung eine Reibkupplung mit reibschlüssig wirkenden Kupplungshälften ist.

4. Lineareinheit nach Anspruch 1 oder 2, **dadurch gekennzeichnet, daß** die Kupplung (21) eine formschlüssig wirkende Kupplung (21) ist mit einem Zick-Zack-Profil oder einem Wellenprofil (28, 29) an den zusammenwirkenden Flächen von Kupplungshälften (22, 23) der Kupplung (21).

5. Lineareinheit nach Anspruch 4, **dadurch gekennzeichnet, daß** das Wellenprofil (28, 29) auf beiden Seiten von Kupplungsvorsprüngen (32) eine unterschiedliche Steigung von Flanken (30, 31) der Kupplungsvorsprünge (32) aufweist, derart, daß sich je Drehrichtung Kupplung (21) ein unterschiedliches Grenzmoment ergibt.

6. Lineareinheit nach einem der Ansprüche 3 bis 5, **dadurch gekennzeichnet, daß** die eine Kupplungshälfte (22) in Längsrichtung (16) der Spindel (15) fest und die andere Kupplungshälfte (23) von einer ausgerückten Stellung in eine eingerückte Stellung verschieblich ist.

7. Lineareinheit nach Anspruch 6, **dadurch gekennzeichnet, daß** die verschiebliche Kupplungshälfte (23) mittels einer Feder (25) in Richtung auf die feste Kupplungshälfte (22) vorgespannt ist.

8. Lineareinheit nach Anspruch 6 oder 7, **dadurch gekennzeichnet, daß** die verschiebliche Kupplungshälfte (23) in ihrer ausgerückten Stellung arretierbar ist.

9. Lineareinheit mit einer Spindel (15), einer auf der Spindel (15) laufenden Spindelmutter (17) und einem Antrieb (18), mittels dessen die Spindel (15) oder die Spindelmutter (17) um ihre Längsachse rotierend antreibbar ist, **dadurch gekennzeichnet, daß** der Antrieb (18) bei Überschreiten eines vorbestimmten Drehmomentes, nachfolgend als Grenzmoment bezeichnet, selbsttätig abschaltet.

10. Lineareinheit nach Anspruch 9, **dadurch gekennzeichnet, daß** das Abschalten des Antriebes (18) mittels eines Strombegrenzungsmoduls erfolgt, welches bei Überschreiten eines bestimmten Wertes der Stromaufnahme durch den Antrieb (18) die Energieversorgung für den Antrieb (18) unterbricht, insbesondere wobei eine Polaritätsumkehr für einen Drehrichtungswechsel des Antriebs (18) vor dem Strombegrenzungsmodul erfolgt.
